# EUROPEAN PATENT APPLICATION

(11) **EP 4 509 557 A1**
(43) Date of publication of application: **19.02.2025**
(21) Application number: 22942794.3
(22) Date of filing: 23.12.2022
(51) Int. Cl.: C08L 7/00, B60C 1/00, B60C 15/06, C08K 3/04, C08K 3/06, C08K 3/36, C08K 5/548, C08L 9/00, C08L 15/00

(54) **RUBBER COMPOSITION FOR RIM CUSHIONS**

(30) Priority: 17.05.2022 JP 2022080925
(71) Applicant: The Yokohama Rubber Co., Ltd., Hiratsuka-shi, Kanagawa 254-8601 (JP)
(72) Inventor: KARASAWA Yuichiro, Hiratsuka-shi, Kanagawa 254-8601 (JP); KITAMURA Takamasa, Hiratsuka-shi, Kanagawa 254-8601 (JP)
(74) Representative: Dilg, Haeusler, Schindelmann Patentanwaltsgesellschaft mbH
(86) International application number: PCT/JP2022/047591
(87) International publication number: WO 2023/223593

(57) **Abstract**

Provided is a rubber composition for a rim cushion that can provide satisfactorily maintained hardness, elongation at break, and wear resistance and improved low heat build-up and can provide these performances in a well-balanced and highly compatible manner. Silica having a CTAB adsorption specific surface area of 60 m²/g to 100 m²/g, carbon black having a CTAB adsorption specific surface area of 60 m²/g to 160 m²/g, and a sulfur-containing silane coupling agent are blended in diene rubber containing 35 mass% to 65 mass% of isoprene rubber and 35 mass% to 65 mass% of butadiene rubber. At least one type of terminal-modified butadiene rubber for silica is used as the butadiene rubber. A blended amount of the silica per 100 parts by mass of the diene rubber is 10 parts by mass or more and a total of the blended amount of the silica. A blended amount of the carbon black per 100 parts by mass of the diene rubber is more than 50 parts by mass. A product of a stress M100 at 100% elongation and hardness is set to 150 or more.

## Description

### Technical Field

The present invention relates to a rubber composition for rim cushions, which is intended mainly for use in a rim cushion rubber layer of a tire.

### Background Art

To reduce the environmental impact, improvement of fuel economy performance of a pneumatic tire during travel has been awaited. To that end, heat build-up of a rubber composition constituting each part of the pneumatic tire is suppressed. In recent years, to further improve the fuel economy performance, for example, suppressing heat build-up of a rubber composition constituting a rim cushion rubber layer of the pneumatic tire has also been awaited.

As an indicator of the heat build-up of a rubber composition, tan δ at 60°C (hereinafter, referred to as "tan δ (60°C)") from dynamic visco-elasticity measurement is typically used, and smaller tan δ (60°C) of the rubber composition indicates less heat build-up. Examples of methods of reducing the tan δ (60°C) of a rubber composition include reducing a blended amount of filler such as carbon black, and increasing a particle size of carbon black. Alternatively, blending of silica having a large particle size has also been proposed (e.g., Patent Document 1 describes that reduction of heat build-up is attempted by blending silica having a large particle size in a rubber composition for sidewalls). However, these methods cannot always provide adequate rubber hardness, and effects on elongation at break and wear resistance required as a rubber composition for rim cushions are also concern. Thus, for a rubber composition for rim cushions, further measures for improving low heat build-up (tan δ (60°C)) while satisfactorily maintaining elongation at break and wear resistance have been awaited.

### Citation List

### Patent Literature

Patent Document 1: JP 2013-001889 A

### Summary of Invention

### Technical Problem

An object of the present invention is to provide a rubber composition for rim cushions that can provide satisfactorily maintained elongation at break and wear resistance and improved low heat build-up and can provide these performances in a well-balanced and highly compatible manner.

### Solution to Problem

The rubber composition for rim cushions of an embodiment of the present invention to achieve the object described above includes: in diene rubber containing 35 mass% to 65 mass% of isoprene rubber and 35 mass% to 65 mass% of butadiene rubber, silica having a CTAB adsorption specific surface area of 60 m²/g to 100 m²/g; carbon black having a CTAB adsorption specific surface area of 60 m²/g to 160 m²/g; and a sulfur-containing silane coupling agent. The butadiene rubber contains at least one type of terminal-modified butadiene rubber for silica; a blended amount of the silica per 100 parts by mass of the diene rubber is 10 parts by mass or more. A total of the blended amount of the silica and a blended amount of the carbon black per 100 parts by mass of the diene rubber is more than 50 parts by mass. A product of a stress M100 (unit: MPa) at 100% elongation at room temperature and hardness at room temperature is 150 or more.

### Advantageous Effects of Invention

The rubber composition for rim cushions of an embodiment of the present invention is made up of the blend described above, and the stress M100 at 100% elongation and the hardness satisfies the relationship described above, thus allowing elongation at break and wear resistance to be satisfactorily maintained, allowing low heat build-up to be improved, and allowing these performances to be provided in a well-balanced and highly compatible manner. In particular, elongation at break can be improved by using silica having a CTAB adsorption specific surface area of 60 m²/g to 100 m²/g and having a large particle size, and good elongation at break can be maintained while the terminal-modified butadiene rubber for silica is used, and excellent low heat build-up can be achieved. Synergy between these can improve low heat build-up (tan δ at 60°C) while satisfactorily maintaining elongation at break and wear resistance. A product of the stress M100 at 100% elongation and the hardness being 150 or more allows physical properties required as a rim cushion rubber, such as wear resistance, to be satisfactorily exhibited.

In an embodiment of the present invention, a proportion of the terminal-modified butadiene rubber for silica contained in the butadiene rubber preferably ranges from 15 mass% to 100 mass%. The total of blended amounts of the silica and the carbon black per 100 parts by mass of the diene rubber is preferably 80 parts by mass or less. A sulfur and a vulcanization accelerator are blended in the diene rubber, and a total of blended amounts of the sulfur and the vulcanization accelerator per 100 parts by mass of the diene rubber is preferably 3.5 parts by mass or more.

The rubber composition for rim cushion rubbers of an embodiment of the present invention can be suitably used for rim cushions rubber layer of a tire. A tire including a rim cushion rubber layer made of the rubber composition for rim cushions of an embodiment of the present invention can have reduced rolling resistance and improved low fuel economy performance while good elongation at break and wear resistance required as a rim cushion rubber are exhibited due to excellent physical properties of the rubber composition for rim cushions of an embodiment of the present invention.

### Brief Description of Drawings

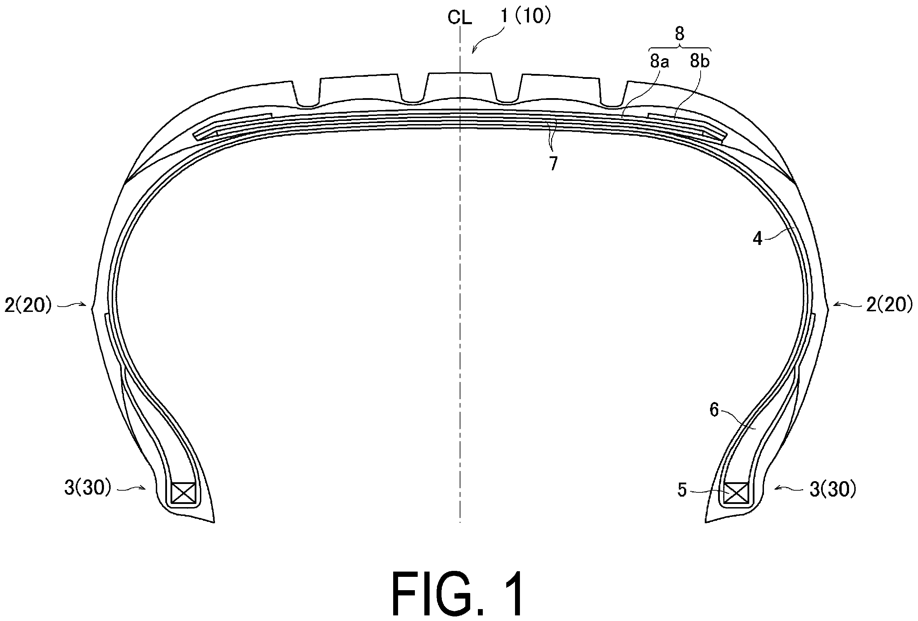

FIG. 1 is a meridian cross-sectional view illustrating an example of a pneumatic tire using a rubber composition for rim cushions according to an embodiment of the present invention.

### Description of Embodiments

Configurations of embodiments of the present invention will be described in detail below with reference to the accompanying drawings.

As illustrated in FIG. 1, a pneumatic tire using the rubber composition for rim cushions according to an embodiment of the present invention includes a tread portion 1, a pair of sidewall portions 2 respectively disposed on both sides of the tread portion 1, and a pair of bead portions 3 each disposed on an inner side of the pair of sidewall portions 2 in a tire radial direction. "CL" in FIG. 1 denotes a tire equator. Although not illustrated in FIG. 1, which is a meridian cross-sectional view, the tread portion 1, the sidewall portions 2, and the bead portions 3 each extend in a tire circumferential direction and form an annular shape. This forms a toroidal basic structure of the pneumatic tire. Hereinafter, although the description using FIG. 1 is basically based on the illustrated meridian cross-sectional shape, all of the tire components extend in the tire circumferential direction and form the annular shape.

A carcass layer 4 is disposed between the pair of left and right bead portions 3. This carcass layer 4 includes a plurality of reinforcing cords extending in the tire radial direction, and is folded back from a vehicle inner side to a vehicle outer side around a bead core 5 disposed in each bead portion 3. A bead filler 6 is disposed on the periphery of the bead core 5, and the bead filler 6 is enveloped by a body portion and a folded back portion of the carcass layer 4. On the other hand, in the tread portion 1, a plurality of belt layers 7 (two layers in FIG. 1) are embedded on an outer circumferential side of the carcass layer 4. The belt layers 7 each include a plurality of reinforcing cords inclining with respect to the tire circumferential direction and are disposed such that the reinforcing cords of the different layers intersect each other. In these belt layers 7, the inclination angle of the reinforcing cords with respect to the tire circumferential direction is set in a range of, for example, from 10° to 40°. Moreover, a belt reinforcing layer 8 (two layers including a full cover 8a covering the entire width of the belt layer 7 and an edge cover 8b locally covering an end of the belt layer 7) is provided on an outer circumferential side of the belt layer 7. The belt reinforcing layer 8 includes organic fiber cords oriented in the tire circumferential direction. In the belt reinforcing layer 8, the angle with respect to the tire circumferential direction in the organic fiber cord is set to 0° to 5°, for example.

A tread rubber layer 10 is disposed on the outer circumferential side of the carcass layer 4 in the tread portion 1. A side rubber layer 20 is disposed on the outer circumferential side (outward in the tire width direction) of the carcass layer 4 in each of the sidewall portions 2. A rim cushion rubber layer 30 is disposed on the outer circumferential side (outward in the tire width direction) of the carcass layer 4 in each of the bead portions 3. The rubber composition for rim cushions of an embodiment of the present invention is used for the rim cushion rubber layer 30 of such a tire. Accordingly, the basic structure of other portions is not limited to the structure described above. The rim cushion rubber layer 30 is a layer adjacent to the side rubber layer 20; however, unlike the side rubber layer 20 to which flexural fatigue resistance or the like is required to constitute a sidewall portion 2 experiencing the largest bending in the tire during driving, the rim cushion rubber layer 30 is a layer required to have a high degree of hardness and excellent wear resistance because the rim cushion rubber layer 30 is a member that tends to have wear caused by friction between the rim cushion rubber layer 30 and a rim (not illustrated) due to contact with the rim.

The tire to which the rubber composition for rim cushions of an embodiment of the present invention is used is preferably a pneumatic tire described above (a tire inflated with the air, an inert gas such as nitrogen, or another gas in its inner portion) but may also be a non-pneumatic tire. **In** a case of a non-pneumatic tire, the rubber composition for rim cushions of an embodiment of the present invention is used in a portion which is in contact with a rim when the non-pneumatic tire is mounted on the rim (portion corresponding to the rim cushion rubber layer 30 in a pneumatic tire).

In the rubber composition for rim cushions according to an embodiment of the present invention, the rubber component is diene rubber and always contains isoprene rubber and butadiene rubber. The butadiene rubber contains at least one type of terminal-modified butadiene rubber for silica. Use of the isoprene rubber and the butadiene rubber (terminal-modified butadiene rubber for silica) in this manner is advantageous to improve low heat build-up while satisfactorily maintaining elongation at break and wear resistance.

Examples of the isoprene rubber include various natural rubbers, epoxidized natural rubbers, and various synthetic polyisoprene rubbers. Among these isoprene rubbers, a natural rubber can be particularly suitably used. The blended amount of the isoprene rubber ranges from 35 mass% to 65 mass%, and preferably from 40 mass% to 60 mass%, per 100 mass% of the diene rubber. By allowing the amount of the isoprene rubber to be blended, elongation at break, low heat build-up, and wear resistance can be improved in a well-balanced manner. When the blended amount of the isoprene rubber is less than 35 mass%, elongation at break decreases. When the blended amount of the isoprene rubber is more than 65 mass%, wear resistance and low heat build-up deteriorate.

The terminal-modified butadiene rubber for silica is butadiene rubber having both or one molecular terminal modified with a functional group having reactivity with a silanol group on a surface of the silica. Examples of the functional group that reacts with a silanol group include at least one type selected from a polyorganosiloxane group, a hydroxyl group-containing polyorganosiloxane structure, an alkoxysilyl group, a hydroxyl group, an aldehyde group, a carboxyl group, an amino group, an imino group, an epoxy group, an amide group, a thiol group, and an ether group. Among these, the polyorganosiloxane group, the hydroxyl group-containing polyorganosiloxane structure, the alkoxysilyl group, the hydroxyl group, and the amino group are preferred. A combination of a plurality of these functional groups (e.g., two types including the amino group and the alkoxysilyl group) may be used. By allowing at least one type of the terminal-modified butadiene rubber for silica to be contained as the butadiene rubber, affinity to silica having a large particle size described below becomes good, and it is advantageous to improve low heat build-up while satisfactorily maintaining elongation at break and wear resistance. The type of the butadiene rubber other than the terminal-modified butadiene rubber for silica is not particularly limited, and a rubber that can be typically used in rubber compositions for tires can be used.

From the perspective of improving wear resistance, terminal-modified butadiene rubber for silica having a glass transition temperature Tg of preferably from -110°C to -70°C is used. Wear resistance can be improved by a low glass transition temperature as described above. The glass transition temperature can be measured by a differential scanning calorimetry (DSC).

The blended amount of the butadiene rubber ranges from 35 mass% to 65 mass%, and preferably from 40 mass% to 60 mass%, per 100 mass% of the diene rubber. Blending an adequate amount of the butadiene rubber in this manner is advantageous to improve elongation at break, low heat build-up, and wear resistance in a well-balanced manner. When the blended amount of the butadiene rubber is less than 35 mass%, wear resistance and low heat build-up deteriorate. When the blended amount of the butadiene rubber is more than 65 mass%, elongation at break decreases.

As described above, the butadiene rubber always contains at least one type of the terminal-modified butadiene rubber for silica, and the proportion of the terminal-modified butadiene rubber for silica preferably ranges from 15 mass% to 100 mass%, and more preferably from 40 mass% to 70 mass%, when the total amount of the butadiene rubber contained in the rubber composition for rim cushions of an embodiment of the present invention is 100 mass%. By allowing an adequate amount of the terminal-modified butadiene rubber for silica to be contained in this manner, affinity to silica having a large particle size described below becomes good, and it is advantageous to improve low heat build-up while satisfactorily maintaining elongation at break and wear resistance.

The rubber composition for rim cushions of an embodiment of the present invention can contain another diene rubber besides the isoprene rubber and the butadiene rubber described above. As such another diene rubber, a rubber that can be typically used in a rubber composition for tires can be used. Examples thereof include a styrene-butadiene rubber. These other diene rubbers may be used alone or as a discretionary blend.

In an embodiment of the present invention, silica and carbon black are always contained as fillers in the diene rubber described above. **In** blending these fillers, the blended amount of the silica is 10 parts by mass or more and preferably ranges from 20 parts by mass to 70 parts by mass, per 100 parts by mass of the diene rubber described above. The total of the blended amounts of the silica and the carbon black is more than 50 parts by mass, preferably 80 parts by mass or less, and more preferably ranges from 55 parts by mass to 70 parts by mass per 100 parts by mass of the diene rubber. By allowing adequate amounts of the silica and the carbon black to be blended in this manner, elongation at break, low heat build-up, and wear resistance can be improved in a well-balanced manner. When the blended amount of the silica is less than 10 parts by mass, elongation at break decreases. When the total of the blended amounts of the silica and the carbon black is 50 parts by mass or less, wear resistance decreases. The blended amount of the carbon black alone is not limited to a particular amount and preferably ranges from 0 parts by mass to 60 parts by mass and more preferably from 5 parts by mass to 50 parts by mass.

As the silica used in an embodiment of the present invention, silica that is typically used for rubber compositions for tires, such as wet silica, dry silica, surface-treated silica, can be used. However, silica having a CTAB adsorption specific surface area of 60 m²/g to 100 m²/g, and preferably 65 m²/g to 95 m²/g, is always used. By using the silica having a large particle size in this manner, low heat build-up can be improved. When the CTAB adsorption specific surface area of the silica is less than 60 m²/g, elongation at break and wear resistance decrease. When the CTAB adsorption specific surface area of the silica is more than 100 m²/g, low heat build-up deteriorates. As long as the silica satisfies the conditions described above, the silica may be appropriately selected and used from commercially available products, or silica that is obtained by an ordinary production method can be used.

As the carbon black used in an embodiment of the present invention, carbon black that is typically used for rubber compositions for tires can be used. However, carbon black having a CTAB adsorption specific surface area of 60 m²/g to 160 m²/g, and preferably 80 m²/g to 135 m²/g, is always used. Use of the carbon black described above is advantageous to improve elongation at break, low heat build-up, and wear resistance in a well-balanced manner. When the CTAB adsorption specific surface area of the carbon black is less than 60 m²/g, elongation at break and wear resistance decrease. When the CTAB adsorption specific surface area of the carbon black is more than 160 m²/g, low heat build-up deteriorates.

The rubber composition of an embodiment of the present invention may also contain other fillers other than the silica and the carbon black. Examples of such other fillers include materials typically used for rubber compositions for tires, such as clay, talc, calcium carbonate, mica, and aluminum hydroxide.

In the rubber composition for rim cushions of an embodiment of the present invention, when the silica described above is blended, a sulfur-containing silane coupling agent is always blended. By blending the silane coupling agent, the dispersibility of the silica in the diene rubber can be improved. Examples of the sulfur-containing silane coupling agent include bis-(3-triethoxysilylpropyl)tetrasulfide, bis-(3-triethoxysilylpropyl)disulfide, 3-trimethoxysilylpropyl benzothiazole tetrasulfide, γ-mercaptopropyl triethoxysilane, and 3-octanoylthiopropyl triethoxysilane. Among these, those having a tetrasulfide bond in the molecule can be particularly suitably used. The blended amount of the silane coupling agent is preferably less than 10 mass% and more preferably ranges from 3 mass% to 9 mass% with respect to the blended amount of the silica. When the blended amount of the silane coupling agent is 10 mass% or more with respect to the blended amount of the silica, the silane coupling agent condenses, and thus desired hardness and strength of the rubber composition cannot be achieved.

The rubber composition for rim cushions of an embodiment of the present invention preferably further contains sulfur and a vulcanization accelerator. In blending the sulfur and the vulcanization accelerator, the total of the blended amounts thereof is preferably 3.5 parts by mass or more and more preferably ranges from 4 parts by mass to 7.5 parts by mass per 100 parts by mass of the diene rubber. By blending adequate amounts of the sulfur and the vulcanization accelerator in this manner, hardness, stress M100 at 100% elongation at room temperature, and low heat build-up can be improved in a well-balanced manner. When the total of the blended amounts of the sulfur and the vulcanization accelerator is less than 3.5 parts by mass, the balance of the hardness, the stress M100 at 100% elongation at room temperature, and the low heat build-up deteriorates. Each of the blended amounts of the sulfur and the vulcanization accelerator is not limited to a particular amount. The blended amount of the sulfur preferably ranges from 1.5 parts by mass to 5 parts by mass and more preferably from 2 parts by mass to 4 parts by mass. The blended amount of the vulcanization accelerator preferably ranges from 1.5 parts by mass to 4 parts by mass and more preferably from 2 parts by mass to 3.5 parts by mass.

As the vulcanization accelerator, a vulcanization accelerator that is typically used for rubber compositions for tires can be used, and examples thereof include a sulfenamide-based vulcanization accelerator, a guanidine-based vulcanization accelerator, and a thiuram-based vulcanization accelerator. Examples of the sulfenamide-based vulcanization accelerator include N,N-dicyclohexyl-1,3-benzothiazole-2-sulfenamide (DZ), N-cyclohexyl-2-benzothiazolesulfenamide (CZ), N-oxydiethylene-2-benzothiazolesulfenamide (OBS), and N-(tert-butyl)benzothiazole-2-sulfenamide (NS). Examples of the guanidine-based vulcanization accelerator include diphenylguanidine (DPG) and di-ortho-tolylguanidine. Examples of the thiuram-based vulcanization accelerator include tetramethylthiuram monosulfide, tetramethylthiuram disulfide, and tetrabenzylthiuram disulfide. Among these, N-cyclohexyl-2-benzothiazolesulfenamide (CZ), N-(tert-butyl)benzothiazole-2-sulfenamide (NS), and diphenylguanidine (DPG) can be particularly suitably used. Among these, a combined use of a sulfenamide-based vulcanization accelerator and optionally a guanidine-based vulcanization accelerator or a thiuram-based vulcanization accelerator is preferred. In particular, a combined use of two types including a sulfenamide-based vulcanization accelerator and a guanidine-based vulcanization accelerator is preferred.

In the rubber composition for rim cushions of an embodiment of the present invention, compounding agents other than those described above may also be added. Examples of such other compounding agents include various compounding agents typically used in rubber compositions for tires, such as vulcanizing or crosslinking agents other than the sulfur, anti-aging agents, and liquid polymers. These compounding agents can be blended in known typical amounts as long as the object of the present invention is not hindered. As a kneader, a typical kneader for a rubber, such as a Banbury mixer, a kneader, or a roller, may be used.

For the rubber composition for rim cushions of an embodiment of the present invention, in addition to the rubber composition containing the blend described above, a product of a stress M100 (unit: MPa) at 100% elongation at room temperature and hardness at room temperature is set to 150 or more, and preferably 200 to 400. By allowing these characteristics, suitable rubber physical properties (e.g., hardness, elongation at break, and wear resistance) as a rim cushion rubber can be achieved. When the product described above is less than 150, wear resistance decreases. This product can be adjusted by, for example, the blended amount of the filler and the total amount of the sulfur and the vulcanization accelerator described above. The stress M100 at 100% elongation at room temperature is a value measured under the condition of a tensile speed of 500 mm/minute at room temperature (20°C) using a No. 3 dumbbell test piece in accordance with JIS K 6251. The hardness at room temperature is a value measured at room temperature (temperature: 20°C) using a type A durometer in accordance with JIS K 6253. Each value is not particularly limited as long as the product of the stress M100 and the hardness satisfies the relationship described above; however, for example, the stress M100 at 100% elongation at room temperature can be set to 1.0 MPa to 10.0 MPa, and the hardness at room temperature can be set to 50 to 80, and preferably 60 to 75.

The present invention will further be described below by way of Examples, but the scope of the present invention is not limited to the Examples.

### Example

For preparation of 22 types of rubber compositions for rim cushions (Standard Example 1, Comparative Examples 1 to 10, and Examples 1 to 11) having formulations shown in Tables 1 and 2, blending components other than vulcanization accelerators and sulfur were weighed and kneaded in a 1.8 L sealed Banbury mixer for 5 minutes. The resultant master batch was then discharged and cooled at room temperature. Thereafter, this master batch was added into the 1.8 L sealed Banbury mixer, and the vulcanization accelerators and the sulfur were added and mixed for 2 minutes. Thus, each of the rubber compositions for rim cushions was obtained.

The obtained rubber composition for rim cushions was vulcanized in a mold having a predetermined shape at 170°C for 10 minutes, and thus a vulcanized rubber test piece was prepared. The hardness of this vulcanized rubber test piece was measured at a temperature of 20°C with a type A durometer in accordance with JIS K 6253. A JIS No. 3 dumbbell test piece was cut out from the obtained vulcanized rubber test piece in accordance with JIS K 6251, and a stress M100 at 100% elongation at room temperature was measured under the conditions of a tensile speed of 500 mm/minute at room temperature (20°C). Using these hardness and value of M100, a product of the stress M100 (unit: MPa) at 100% elongation at room temperature and the hardness at room temperature was calculated and shown in the rows of "Product of M100 and hardness" in Tables 1 and 2. Tables 1 and 2 also listed the total of blended amounts of the carbon black and the silica ("Total of CB plus silica" in the tables).

Using each of the rubber compositions for rim cushions described above (vulcanized rubber test pieces), evaluations of elongation at break (EB), tan δ at 60°C, and wear resistance were performed by the methods described below.

### Elongation at Break (EB)

A JIS No. 3 dumbbell test piece was cut out from each of the rubber compositions for rim cushions (vulcanized rubber test pieces) in accordance with JIS K 6251, tensile testing was performed at a pulling speed of 500 mm/minute at room temperature (20°C), and a tensile elongation at break at the time of breakage was measured. The obtained result was expressed as an index value with Standard Example 1 being assigned an index value of 100. A larger index value indicates a greater tensile elongation at break. The index value of "95" or more indicates that good tensile elongation at break that was approximately the same degree as that of Standard Example 1 was maintained.

### tan δ at 60°C

Using a viscoelastic spectrometer, available from Toyo Seiki Seisakusho, Ltd., tan δ at 60°C of each of the rubber compositions for rim cushions (vulcanized rubber test pieces) was measured under the following conditions: initial strain of 10%, amplitude of ±2%, frequency of 20 Hz, and temperature of 60°C. The evaluation results were expressed as index values with Standard Example 1 being assigned a value of 100, and shown in the rows of "tan δ (60°C)" in Tables 1 and 2. A smaller value indicates superior low heat build-up.

### Wear Resistance

For each of the rubber compositions for rim cushions (vulcanized rubber test pieces), the amount of wear was measured using the Pico Abrasion Tester in accordance with ASTM-D2228. The evaluation result was expressed as an index value using a reciprocal of the measurement value of Standard Example 1 as 100. A larger index value indicates more excellent wear resistance. The index value of "98" or more indicates that a level equivalent to that of related art of good wear resistance was adequately maintained.

**[Table 1-1]**

| | | Standard Example 1 | Comparative Example 1 | Comparative Example 2 | Comparative Example 3 | Comparative Example 4 |
|---|---|---|---|---|---|---|
| NR | Parts by mass | 50 | 50 | 50 | 40 | 40 |
| BR1 | Parts by mass | 50 | 25 | 25 | 30 | 30 |
| BR2 | Parts by mass | | 25 | 25 | 30 | 30 |
| CB1 | Parts by mass | 25 | | | | |
| CB2 | Parts by mass | | 25 | 30 | 30 | 55 |
| Silica 1 | Parts by mass | 35 | 10 | 20 | 5 | 5 |
| Silica 2 | Parts by mass | | | | | |
| Silane coupling agent | Parts by mass | 2.5 | 0.6 | 1.6 | | |
| Aroma oil | Parts by mass | 5 | 5 | 5 | 5 | 5 |
| Anti-aging agent 1 | Parts by mass | 2 | 2 | 2 | 2 | 2 |
| Anti-aging agent 2 | Parts by mass | 1 | 1 | 1 | 1 | 1 |
| Wax | Parts by mass | 1 | 1 | 1 | 1 | 1 |
| Stearic acid | Parts by mass | 2 | 2 | 2 | 2 | 2 |
| Zinc oxide | Parts by mass | 3 | 3 | 3 | 3 | 3 |
| Insoluble sulfur | Parts by mass | 3.5 | 2.3 | 2.3 | 1.7 | 1.7 |
| Vulcanization accelerator 1 | Parts by mass | 2.5 | 0.8 | 0.8 | 0.8 | 0.8 |
| Vulcanization accelerator 2 | Parts by mass | 0.5 | | | | |
| Vulcanization accelerator 3 | Parts by mass | | | | | |
| Total of CB plus silica | Parts by mass | 60 | 35 | 50 | 35 | 60 |
| Product of M100 and hardness | | 343 | 73 | 125 | 61 | 144 |
| EB | Index value | 100 | 240 | 222 | 248 | 198 |
| tan δ (60°C) | Index value | 100 | 48 | 60 | 54 | 100 |
| Wear resistance | Index value | 100 | 67 | 52 | 34 | 100 |

**[Table 1-2]**

| | | Comparative Example 5 | Comparative Example 6 | Comparative Example 7 | Comparative Example 8 | Comparative Example 9 | Comparative Example 10 |
|---|---|---|---|---|---|---|---|
| NR | Parts by mass | 30 | 30 | 30 | 60 | 60 | 50 |
| BR1 | Parts by mass | | | | 20 | 20 | 50 |
| BR2 | Parts by mass | 70 | 70 | 70 | 20 | 20 | |
| CB1 | Parts by mass | | | 25 | | 25 | 60 |
| CB2 | Parts by mass | | 25 | | | | |
| Silica 1 | Parts by mass | 35 | 35 | 35 | 35 | | |
| Silica 2 | Parts by mass | | | | | 35 | |
| Silane coupling agent | Parts by mass | 1.4 | 1.4 | 1.4 | 2.5 | 2.5 | 2.5 |
| Aroma oil | Parts by mass | 5 | 5 | 5 | 5 | 5 | 5 |
| Anti-aging agent 1 | Parts mass | 2 | 2 | 2 | 2 | 2 | 2 |
| Anti-aging agent 2 | Parts mass | 1 | 1 | 1 | 1 | 1 | 1 |
| Wax | Parts by mass | 1 | 1 | 1 | 1 | 1 | 1 |
| Stearic acid | Parts by mass | 2 | 2 | 2 | 2 | 2 | 2 |
| Zinc oxide | Parts by mass | 3 | 3 | 3 | 3 | 3 | 3 |
| Insoluble sulfur | Parts by mass | 2.3 | 2.3 | 2.3 | 3.5 | 3.5 | 3.5 |
| Vulcanization accelerator 1 | Parts by mass | 1.7 | 1.7 | 1.7 | 2.5 | 2.5 | 2.5 |
| Vulcanization accelerator 2 | Parts by mass | 0.3 | 0.3 | 0.3 | 0.5 | 0.5 | 0.5 |
| Vulcanization accelerator 3 | Parts by mass | | | | | | |
| Total of CB plus silica | Parts by mass | 35 | 60 | 60 | 35 | 60 | 60 |
| Product of M100 and hardness | | 135 | 228 | 235 | 168 | 374 | 298 |
| EB | Index value | 196 | 151 | 146 | 156 | 90 | 122 |
| tan δ (60°C) | Index value | 48 | 92 | 106 | 34 | 120 | 207 |
| Wear resistance | Index value | 25 | 80 | 85 | 28 | 100 | 105 |

**[Table 2-1]**

| | | Example 1 | Example 2 | Example 3 | Example 4 | Example 5 |
|---|---|---|---|---|---|---|
| NR | Parts by mass | 60 | 60 | 60 | 50 | 60 |
| BR1 | Parts by mass | 20 | 10 | | 30 | 20 |
| BR2 | Parts by mass | 20 | 30 | 40 | 20 | 20 |
| CB1 | Parts by mass | 25 | 25 | 25 | 25 | 10 |
| CB2 | Parts by mass | | | | | |
| Silica 1 | Parts by mass | 35 | 35 | 35 | 35 | 50 |
| Silica 2 | Parts by mass | | | | | |
| Silane coupling agent | Parts by mass | 2.5 | 2.5 | 2.5 | 2.5 | 3.5 |
| Aroma oil | Parts by mass | 5 | 5 | 5 | 5 | 5 |
| Anti-aging agent 1 | Parts by mass | 2 | 2 | 2 | 2 | 2 |
| Anti-aging agent 2 | Parts by mass | 1 | 1 | 1 | 1 | 1 |
| Wax | Parts by mass | 1 | 1 | 1 | 1 | 1 |
| Stearic acid | Parts by mass | 2 | 2 | 2 | 2 | 2 |
| Zinc oxide | Parts by mass | 3 | 3 | 3 | 3 | 3 |
| Insoluble sulfur | Parts by mass | 3.5 | 3.5 | 3.5 | 3.5 | 3.5 |
| Vulcanization accelerator 1 | Parts by mass | 2.5 | 2.5 | 2.5 | 2.5 | 2.5 |
| Vulcanization accelerator 2 | Parts by mass | 0.5 | 0.5 | 0.5 | 0.5 | 0.5 |
| Vulcanization accelerator 3 | Parts by mass | | | | | |
| Total of CB plus silica | Parts by mass | 60 | 60 | 60 | 60 | 60 |
| Product of M100 and hardness | | 325 | 328 | 339 | 295 | 311 |
| EB | Index value | 106 | 101 | 99 | 100 | 100 |
| tan δ (60°C) | Index value | 79 | 73 | 56 | 72 | 50 |
| Wear resistance | Index value | 100 | 99 | 98 | 104 | 104 |

**[Table 2-2]**

| | | Example 6 | Example 7 | Example 8 | Example 9 | Example 10 | Example 11 |
|---|---|---|---|---|---|---|---|
| NR | Parts by mass | 60 | 40 | 60 | 60 | 60 | 60 |
| BR1 | Parts by mass | 20 | 30 | 20 | 20 | 20 | 20 |
| BR2 | Parts by mass | 20 | 30 | 20 | 20 | 20 | 20 |
| CB1 | Parts by mass | 10 | 10 | 25 | 20 | 25 | 25 |
| CB2 | Parts by mass | | | | | | |
| Silica 1 | Parts by mass | 50 | 50 | 26 | 50 | 26 | 26 |
| Silica 2 | Parts by mass | | | | | | |
| Silane coupling agent | Parts by mass | 3.5 | 3.5 | 1.8 | 3.5 | 1.8 | 1.8 |
| Aroma oil | Parts by mass | 5 | 5 | 5 | 5 | | |
| Anti-aging agent 1 | Parts by mass | 2 | 2 | 2 | 2 | 2 | 2 |
| Anti-aging agent 2 | Parts by mass | 1 | 1 | 1 | 1 | 1 | 1 |
| Wax | Parts by mass | 1 | 1 | 1 | 1 | 1 | 1 |
| Stearic acid | Parts by mass | 2 | 2 | 2 | 2 | 1.5 | 1.5 |
| Zinc oxide | Parts by mass | 3 | 3 | 3 | 3 | 3 | 3 |
| Insoluble sulfur | Parts by mass | 3.5 | 3.5 | 3.5 | 3.5 | 2.5 | 3 |
| Vulcanization accelerator 1 | Parts by mass | 2.5 | 2.5 | 2.5 | 2.5 | 1.5 | 2 |
| Vulcanization accelerator 2 | Parts by mass | | 0.5 | 0.5 | 0.5 | 0.5 | 0.5 |
| Vulcanization accelerator 3 | Parts by mass | 0.5 | | | | | |
| Total of CB plus silica | Parts by mass | 60 | 60 | 51 | 70 | 51 | 51 |
| Product of M100 and hardness | | 320 | 338 | 238 | 403 | 150 | 200 |
| EB | Index value | 100 | 99 | 122 | 95 | 144 | 125 |
| tan δ (60°C) | Index value | 50 | 46 | 67 | 65 | 92 | 80 |
| Wear resistance | Index value | 101 | 99 | 98 | 110 | 98 | 98 |

Types of used raw materials shown in Tables 1 and 2 are described below.
- NR: Natural rubber, STR 20
- BR1: Butadiene rubber, Nipol BR1220, available from Zeon Corporation
- BR2: Terminal-modified butadiene rubber for silica, BR511, available from JSR Corporation
- CB1: Carbon black (grade: ISAF), Show Black N234, available from Cabot Japan K.K. (CTAB adsorption specific surface area: 115 m²/g)
- CB2: Carbon black (grade: FEF), Show Black N550, available from Cabot Japan K.K. (CTAB adsorption specific surface area: 40 m²/g)
- Silica 1: 1085 GR, available from Solvay (CTAB adsorption specific surface area: 85 m²/g)
- Silica 2: 115 GR, available from Solvay (CTAB adsorption specific surface area: 115 m²/g)
- Silane coupling agent: Si69, available from Evonik Degussa Japan Co., Ltd.
- Aroma oil: Extract No. 4S, available from Showa Shell Sekiyu K.K.
- Anti-aging agent 1: Santoflex 6PPD, available from Flexsys
- Anti-aging agent 2: NOCRAC 224, available from Ouchi Shinko Chemical Industrial Co., Ltd.
- Wax: Paraffin wax, available from Ouchi Shinko Chemical Industrial Co., Ltd.
- Stearic acid: Beads stearic acid, available from NOF Corporation
- Zinc oxide: Zinc Oxide III, available from Seido Chemical Industry Co., Ltd.
- Insoluble sulfur: MUCRON OT-20, available from Shikoku Chemicals Corporation
- Vulcanization accelerator 1: Sulfenamide-based vulcanization accelerator, NOCCELER NS-P, available from Ouchi Shinko Chemical Industrial Co., Ltd.
- Vulcanization accelerator 2: Guanidine-based vulcanization accelerator, Perkacit DPG, available from Flexsys Inc.
- Vulcanization accelerator 3: Thiuram-based vulcanization accelerator, tetrabenzylthiuram disulfide, Perkacit TBzTD pdr-d, available from Performance Additives

As can be seen from Tables 1 and 2, Examples 1 to 11 improved, compared to Standard Example 1, low heat build-up (tan δ at 60°C) while maintaining and improving good hardness, elongation at break, and wear resistance and provided these performances in a well-balanced and compatible manner.

On the other hand, because Comparative Example 1 had a small CTAB adsorption specific surface area of the carbon black, a small total blended amount of the carbon black and the silica, and a small product of M100 and hardness, the wear resistance could not be maintained. Because Comparative Example 2 had a small CTAB adsorption specific surface area of the carbon black and a small product of M100 and hardness, the wear resistance could not be maintained. Because Comparative Example 3 had a small CTAB adsorption specific surface area of the carbon black, a small total blended amount of the carbon black and the silica, and a small product of M100 and hardness, the wear resistance could not be maintained. Because Comparative Example 4 had a small CTAB adsorption specific surface area of the carbon black and a small product of M100 and hardness, the wear resistance could not be maintained. Because Comparative Example 5 had a large blended amount of the butadiene rubber while the blended amount of the natural rubber was small and contained no carbon black, a small total blended amount of the carbon black and the silica, and a small product of M100 and hardness, the wear resistance could not be maintained. Because Comparative Example 6 had a large blended amount of the butadiene rubber while the blended amount of the natural rubber was small and the CTAB adsorption specific surface area of the carbon black was small, the wear resistance could not be maintained. Because Comparative Example 7 had a large blended amount of the butadiene rubber while the blended amount of the natural rubber was small, the wear resistance could not be maintained, and the effect of improving low heat build-up could not be achieved. Because Comparative Example 8 contained no carbon black and a small total blended amount of the carbon black and the silica, the wear resistance could not be maintained. Because Comparative Example 9 had a large CTAB adsorption specific surface area of the silica, elongation at break deteriorated, and the effect of improving low heat build-up could not be achieved. Because Comparative Example 10 contained no silica, the effect of improving low heat build-up could not be achieved.

The present disclosure includes the following inventions.

Invention [1] A rubber composition for rim cushions, the rubber composition including:
in diene rubber containing 35 mass% to 65 mass% of isoprene rubber and 35 mass% to 65 mass% of butadiene rubber,
silica having a CTAB adsorption specific surface area of 60 m²/g to 100 m²/g;
carbon black having a CTAB adsorption specific surface area of 60 m²/g to 160 m²/g; and
a sulfur-containing silane coupling agent;
the butadiene rubber containing at least one type of terminal-modified butadiene rubber for silica,
a blended amount of the silica per 100 parts by mass of the diene rubber being 10 parts by mass or more and a total of the blended amount of the silica and a blended amount of the carbon black per 100 parts by mass of the diene rubber being more than 50 parts by mass, and
a product of a stress M100 (unit: MPa) at 100% elongation at room temperature and hardness at room temperature being 150 or more.

Invention [2] The rubber composition for rim cushions according to Invention [1], wherein a proportion of the terminal-modified butadiene rubber for silica contained in the butadiene rubber ranges from 15 mass% to 100 mass%.

Invention [3] The rubber composition for rim cushions according to Invention [1] or [2], wherein the total of the blended amounts of the silica and the carbon black per 100 parts by mass of the diene rubber is 80 parts by mass or less.

Invention [4] The rubber composition for rim cushions according to any one of Inventions [1] to [3], wherein sulfur and a vulcanization accelerator are blended in the diene rubber, and a total of blended amounts of the sulfur and the vulcanization accelerator per 100 parts by mass of the diene rubber is 3.5 parts by mass or more.

Invention [5] A tire including a rim cushion rubber layer made of the rubber composition for rim cushions according to any one of Inventions [1] to [4].

### Reference Signs List

1 Tread portion
2 Sidewall portion
3 Bead portion
4 Carcass layer
5 Bead core
6 Bead filler
7 Belt layer
8 Belt cover layer
10 Tread rubber layer
20 Side rubber layer
30 Rim cushion rubber layer
CL Tire equator

## Claims

1. A rubber composition for rim cushions, the rubber composition comprising:
in diene rubber containing 35 mass% to 65 mass% of isoprene rubber and 35 mass% to 65 mass% of butadiene rubber,
silica having a CTAB adsorption specific surface area of 60 m²/g to 100 m²/g;
carbon black having a CTAB adsorption specific surface area of 60 m²/g to 160 m²/g; and
a sulfur-containing silane coupling agent;
the butadiene rubber containing at least one type of terminal-modified butadiene rubber for silica,
a blended amount of the silica per 100 parts by mass of the diene rubber being 10 parts by mass or more, and a total of the blended amount of the silica and a blended amount of the carbon black per 100 parts by mass of the diene rubber being more than 50 parts by mass, and
a product of a stress M100 (unit: MPa) at 100% elongation at room temperature and hardness at room temperature being 150 or more.

2. The rubber composition for rim cushions according to claim 1, wherein a proportion of the terminal-modified butadiene rubber for silica contained in the butadiene rubber ranges from 15 mass% to 100 mass%.

3. The rubber composition for rim cushions according to claim 1 or 2, wherein the total of the blended amounts of the silica and the carbon black per 100 parts by mass of the diene rubber is 80 parts by mass or less.

4. The rubber composition for rim cushions according to claim 1 or 2, wherein sulfur and a vulcanization accelerator are blended in the diene rubber, and a total of blended amounts of the sulfur and the vulcanization accelerator per 100 parts by mass of the diene rubber is 3.5 parts by mass or more.

5. A tire comprising a rim cushion rubber layer made of the rubber composition for rim cushions according to claim 1 or 2.
